# EUROPEAN PATENT APPLICATION

(11) **EP 1 993 197 A2**
(43) Date of publication of application: **19.11.2008**
(21) Application number: 08290453.3
(22) Date of filing: 15.05.2008
(51) Int. Cl.: H02M 7/217

(54) **AC/DC converter and AC/DC conversion method using the same**

(30) Priority: 16.05.2007 KR 20070047641
(71) Applicant: Felic Communication & Information, Chungbuk 361-800 (KR)
(72) Inventor: Park, Keun Hyung, Chungbuk 360-770 (KR); Lee, Dae Young, Daejeon 350-358 (KR); Han, Chang Woo, Daejoen 305-751 (KR)
(74) Representative: Berger, Helmut

(57) **Abstract**

Disclosed herein are an AC/DC converter which is simple in circuit configuration, generates little ElectroMagnetic Interference (EMI) and has no transformer so that it can be reduced in weight and size and improved in AC/DC conversion efficiency, and an AC/DC conversion method using the same. The AC/DC converter includes a rectification circuit (102) for converting a commercial AC(85-264V) voltage into a ripple AC voltage, a first control circuit (103) for comparing the converted ripple AC voltage with a reference voltage and outputting a first pulse control signal as a result of the comparison, a first switching circuit (104) for switching and outputting the ripple AC voltage from the rectification circuit in response to the first pulse control signal outputted from the first control circuit, and a first charge storage circuit (108) for smoothing the ripple AC voltage outputted from the first switching circuit to convert it into a primary DC voltage.

## Description

This application claims the benefit of Korean Patent Application No. 10-2007-0047641, filed on May 11, 2007, which is hereby incorporated by reference as if fully set forth herein.

### BACKGROUND OF THE INVENTION

### Field of the Invention

The present invention relates to an alternating current (AC)/direct current (DC) converter which is simple in circuit configuration, generates little ElectroMagnetic Interference (EMI) and has no transformer so that it can be reduced in weight and size and improved in AC/DC conversion efficiency.

### Discussion of the Related Art

In general, electric/electronic devices used for various purposes in real life, such as home appliances, computers, terminals, industrial instruments and measuring instruments, contain electronic circuits including controllers. Also, batteries or AC/DC converters are used to drive the electric/electronic devices. The AC/DC converters are adapted to convert commercial AC power of 85-264V(50 or 60Hz) into DC power.

However, such a conventional AC/DC converter is problematic in that it must essentially employ a transformer which steps a voltage down using the turn ratio of a primary winding and secondary winding thereof, and the transformer increases in size and weight as the capacity of current increases toward large capacity. Also, due to the use of the transformer, the AC/DC conversion efficiency is as low as 35% or less and standby power consumption in a no-load state is large.

On the other hand, a high-voltage high-speed switching AC/DC converter using a switching control signal of several hundred KHz or more is disadvantageous in that the level of a converted DC voltage is maintained unstably due to a ripple component of the converted DC voltage and unnecessary high-frequency EMI is generated.

Hereinafter, conventional AC/DC converters will be described with reference to the annexed drawings.

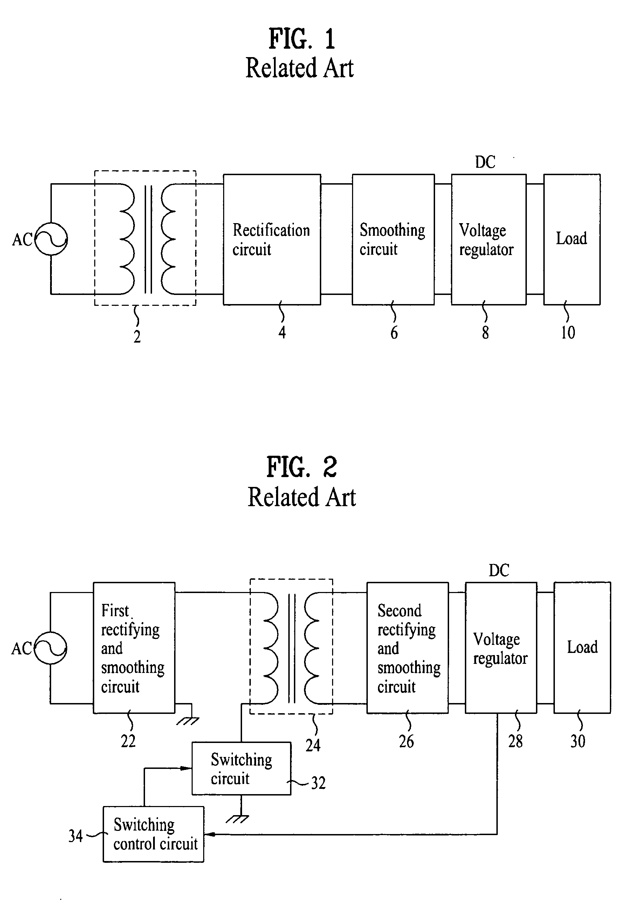

FIG. 1 is a block diagram showing the configuration of a conventional linear AC/DC converter.

The conventional linear AC/DC converter comprises, as shown in FIG. 1, a transformer 2 for stepping a commercial AC voltage of 85-264V up or down, a rectification circuit 4 for half-wave or full-wave rectifying an AC signal having a voltage level transformed by the transformer 2, a smoothing circuit 6 for smoothing the AC signal rectified by the rectification circuit 4 to convert it into a DC voltage, and a voltage regulator 8 for stabilizing the level of the DC voltage and outputting the resulting DC voltage to a load 10.

The transformer 2 steps an input AC voltage up or down to a voltage level desired by the user based on the turn ratio of a primary winding and secondary winding thereof.

The rectification circuit 4 half-wave or full-wave rectifies the AC voltage of the level transformed by the transformer 2 and supplies the rectified AC voltage to the smoothing circuit 6. The smoothing circuit 6 smoothes the rectified AC voltage to convert it into a DC voltage.

Thereafter, the DC voltage from the smoothing circuit 6 is outputted through the voltage regulator 8 accurately as a constant voltage of a level desired by the user.

FIG. 2 is a block diagram showing the configuration of a conventional switched mode AC/DC converter.

The conventional switched mode AC/DC converter comprises, as shown in FIG. 2, a first rectifying and smoothing circuit 22 for primarily rectifying and smoothing an input commercial AC voltage of 85-264V to convert it into a primary DC voltage, a pulse transformer 24 having a primary winding and a secondary winding and serving to step the primary DC voltage from the first rectifying and smoothing circuit 22 up or down, a switching circuit 32 for switching the DC voltage applied to the primary winding of the transformer 24 in response to a switching control pulse to convert it into an AC voltage, a switching control circuit 34 for generating the switching control pulse to control the switching circuit 32, a second rectifying and smoothing circuit 26 for rectifying and smoothing an output voltage from the transformer 24 to convert it into a secondary DC voltage of a level desired by the user, and a voltage regulator 28 for stabilizing the level of the secondary DC voltage and outputting the resulting DC voltage to a load 30.

However, the above-mentioned conventional AC/DC converters have disadvantages as follows.

Firstly, the conventional linear AC/DC converter or switched mode AC/DC converter must essentially employ the transformer 2 or pulse transformer 24 for the stepping-up or down, resulting in a degradation in AC/DC conversion efficiency.

Secondly, the employed transformer 2 or pulse transformer 24 increases in size and weight as the capacity of current increases toward large capacity.

Thirdly, in the switched mode AC/DC converter, when a DC voltage is outputted based on high-speed switching, a ripple component is generated which makes the level of the DC voltage instable. Also, high-frequency EMI is generated due to the high-speed switching.

### SUMMARY OF THE INVENTION

Accordingly, the present invention is directed to an AC/DC converter and an AC/DC conversion method using the same that substantially obviate one or more problems due to limitations and disadvantages of the related art.

An object of the present invention is to provide an AC/DC converter which is capable of being simple in circuit configuration, generating little EMI, being reduced in weight and size and being improved in AC/DC conversion efficiency, and an AC/DC conversion method using the same.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an alternating current (AC)/direct current (DC) converter comprises: a rectification circuit for converting a commercial AC(85-264V) voltage into a ripple AC voltage; a first control circuit for comparing the converted ripple AC voltage with a reference voltage and outputting a first pulse control signal as a result of the comparison; a first switching circuit for switching and outputting the ripple AC voltage from the rectification circuit in response to the first pulse control signal outputted from the first control circuit; and a first charge storage circuit for smoothing the ripple AC voltage outputted from the first switching circuit to convert it into a primary DC voltage.

In another aspect of the present invention, an AC/DC conversion method comprises: a rectification circuit converting a commercial AC(85-264V) voltage into a ripple AC voltage; a first control circuit comparing the converted ripple AC voltage with a reference voltage and outputting a first pulse control signal as a result of the comparison; a first switching circuit switching and outputting the converted ripple AC voltage in response to the first pulse control signal; and a first charge storage circuit smoothing the ripple AC voltage outputted in response to the first pulse control signal to convert it into a primary DC voltage.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram showing the configuration of a conventional linear AC/DC converter;

FIG. 2 is a block diagram showing the configuration of a conventional switched mode AC/DC converter;

FIG. 3 is a block diagram showing the configuration of an AC/DC converter according to a first embodiment of the present invention;

FIG. 4 is a detailed block diagram of a first control circuit of the AC/DC converter according to the first embodiment of the present invention;

FIG. 5 is a detailed block diagram of a second control circuit of the AC/DC converter according to the first embodiment of the present invention;

FIG. 6 is a block diagram showing the configuration of an AC/DC converter according to a second embodiment of the present invention; and

FIGs. 7A to 7E are input/output waveform diagrams of respective components of the AC/DC converter according to the first embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts. In the following description of the present invention, a detailed description of known functions and configurations incorporated herein will be omitted when it may make the subject matter of the invention rather unclear.

An AC/DC converter according to the present invention will hereinafter be described in detail with reference to the annexed drawings.

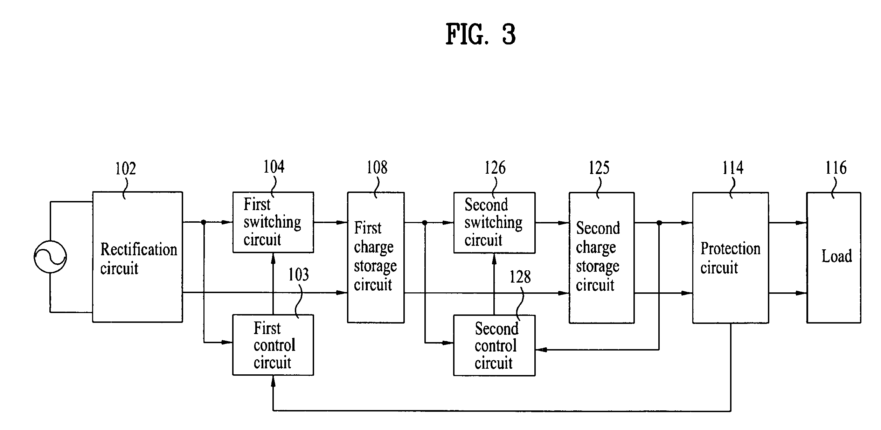

FIG. 3 is a block diagram showing the configuration of an AC/DC converter according to a first embodiment of the present invention.

The AC/DC converter according to the first embodiment of the present invention comprises, as shown in FIG. 3, a rectification circuit 102 for full-wave or half-wave rectifying an input commercial AC voltage of 85-264V to convert it into a ripple AC voltage, a first control circuit 103 for comparing the converted ripple AC voltage with a reference voltage and outputting a first pulse control signal as a result of the comparison, a first switching circuit 104 for switching and outputting the ripple AC voltage from the rectification circuit 102 in response to the first pulse control signal outputted from the first control circuit 103, and a first charge storage circuit 108 for smoothing the ripple AC voltage outputted from the first switching circuit 104 to convert it into a primary DC voltage.

The AC/DC converter according to the first embodiment of the present invention further comprises a second control circuit 128 for outputting a second pulse control signal to variously vary the primary DC voltage from the first charge storage circuit 108 to a voltage level desired by the user, a second switching circuit 126 for switching and outputting the primary DC voltage from the first charge storage circuit 108 in response to the second pulse control signal outputted from the second control circuit 128, a second charge storage circuit 125 for converting the primary DC voltage outputted from the second switching circuit 126 into a secondary DC voltage, and a protection circuit 114 for detecting the output state of the secondary DC voltage from the second charge storage circuit 125, and stopping the operation of the first control circuit 103 when the detected output state is an overvoltage or overcurrent state.

The second switching circuit 126 includes at least one switching element such as a metal-oxide-semiconductor field-effect transistor (MOSFET) or bipolar transistor.

The rectification circuit 102 full-wave or half-wave rectifies an external input commercial AC voltage of 85-264V using a bridge diode BD to convert it into a ripple AC voltage. For example, in the case where a commercial AC voltage of 220V is inputted to the rectification circuit 102 and then full wave rectified using the bridge diode, it may be converted into a ripple AC voltage having a peak value of about 311 to 318V.

Each of the first and second charge storage circuits 108 and 125 includes at least one capacitor and functions to smooth an output voltage from a corresponding one of the first and second switching circuits 104 and 126 to convert it into a DC voltage. Also, each of the first and second charge storage circuits 108 and 125 may further include an inductor to remove pulse noise.

Hereinafter, the configurations of the first control circuit 103 and second control circuit 128 will be described in detail.

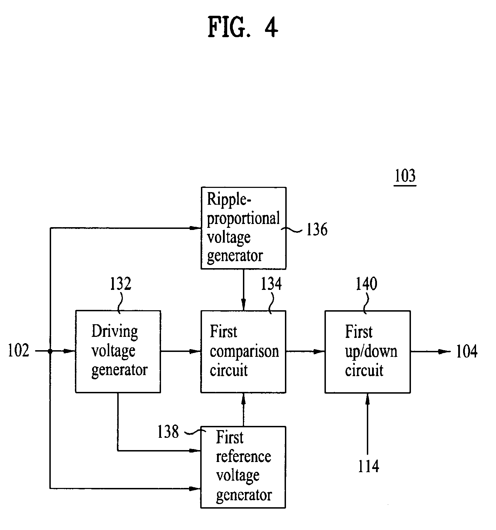

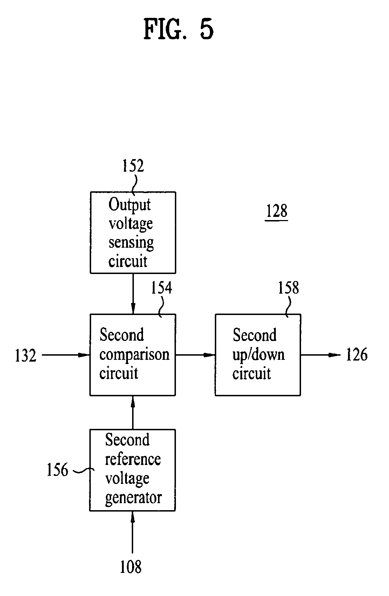

FIG. 4 is a detailed block diagram of the first control circuit of the AC/DC converter according to the first embodiment of the present invention, and FIG. 5 is a detailed block diagram of the second control circuit of the AC/DC converter according to the first embodiment of the present invention.

The first control circuit 103 of the AC/DC converter according to the first embodiment of the present invention includes, as shown in FIG. 4, a driving voltage generator 132 for stepping the ripple AC voltage from the rectification circuit 102 down, smoothing the stepped-down voltage and outputting the smoothed voltage as a driving voltage, a ripple-proportional voltage generator 136 for varying the level of the ripple AC voltage from the rectification circuit 102, a first reference voltage generator 138 for varying the level of the driving voltage outputted from the driving voltage generator 132 and outputting the driving voltage of the varied level as the reference voltage, or smoothing the ripple AC voltage from the rectification circuit 102, stepping the smoothed voltage down and outputting the stepped-down voltage as the reference voltage, and a first comparison circuit 134 for comparing an output voltage from the ripple-proportional voltage generator 136 with the reference voltage outputted from the first reference voltage generator 138 and outputting the first pulse control signal as a result of the comparison.

The first control circuit 103 further includes a first up/down circuit 140 for raising or lowering the level of the first pulse control signal outputted from the first comparison circuit 134 to a pulse control signal level necessary to the first switching circuit 104, and blocking the output of the first pulse control signal from the first control circuit 103 when the overvoltage or overcurrent state is detected by the protection circuit 114. The first up/down circuit 140 functions to raise or lower the level of the first pulse control signal enabling the first switching circuit 104 to be switched. Here, the first switching circuit 104 includes at least one switching element, for example, MOSFET or bipolar transistor. Generally, the switching element has a driving level at which it is switched, for example, a threshold voltage level, preset based on the size thereof. In this regard, the first up/down circuit 140 can vary the level of the first pulse control signal based on the driving level at which the switching element is switched. This function may be performed by a feedback circuit typically including an operational amplifier, or a comparator and a level shifter.

The driving voltage generator 132 includes at least one resistor, at least one capacitor, at least one zener diode, etc., and functions to vary the level of the ripple AC voltage from the rectification circuit 102, convert the AC voltage of the varied level into a DC voltage and output the converted DC voltage as a driving voltage to drive each component of the first control circuit 103.

The ripple-proportional voltage generator 136 divides the ripple AC voltage from the rectification circuit 102 and outputs the divided voltage.

The first comparison circuit 134 includes a comparator. The reference voltage outputted from the first reference voltage generator 138 is inputted to a non-inverting terminal (+) of the comparator and the output voltage from the ripple-proportional voltage generator 136 is inputted to an inverting terminal (-) of the comparator. As a result, the first pulse control signal outputted from the first comparison circuit 134 has a high level when the output voltage from the ripple-proportional voltage generator 136 is lower than the reference voltage and a low level when the output voltage from the ripple-proportional voltage generator 136 is higher than the reference voltage.

The second control circuit 128 of the AC/DC converter according to the first embodiment of the present invention includes, as shown in FIG. 5, an output voltage sensing circuit 152 for sensing the secondary DC voltage from the second charge storage circuit 125 and feeding the sensed voltage back, a second reference voltage generator 156 for varying the level of the driving voltage from the driving voltage generator 132 or the level of the primary DC voltage from the first charge storage circuit 108 to output a reference voltage to variously vary the primary DC voltage to the voltage level desired by the user, and a second comparison circuit 154 for comparing an output voltage from the output voltage sensing circuit 152 with the reference voltage outputted from the second reference voltage generator 156 and outputting the second pulse control signal as a result of the comparison.

The second control circuit 128 further includes a second up/down circuit 158 for raising or lowering the level of the second pulse control signal outputted from the second comparison circuit 154 to a pulse control signal level necessary to the second switching circuit 126. Similarly to the first up/down circuit 140, the second up/down circuit 158 functions to raise or lower the level of the second pulse control signal enabling the second switching circuit 126 to be switched. Here, the second switching circuit 126 includes at least one switching element (MOSFET or bipolar transistor). Generally, the switching element has a driving level at which it is switched, for example, a threshold voltage level, preset based on the size thereof. In this regard, the second up/down circuit 158 can vary the level of the second pulse control signal based on the driving level at which the switching element is switched. This function may be performed by a feedback circuit typically including an operational amplifier, or a comparator and a level shifter.

A DC/DC converter, which has generally come into wide use, may be used instead of the second switching circuit 126, second control circuit 128 and second charge storage circuit 125 in FIG. 3.

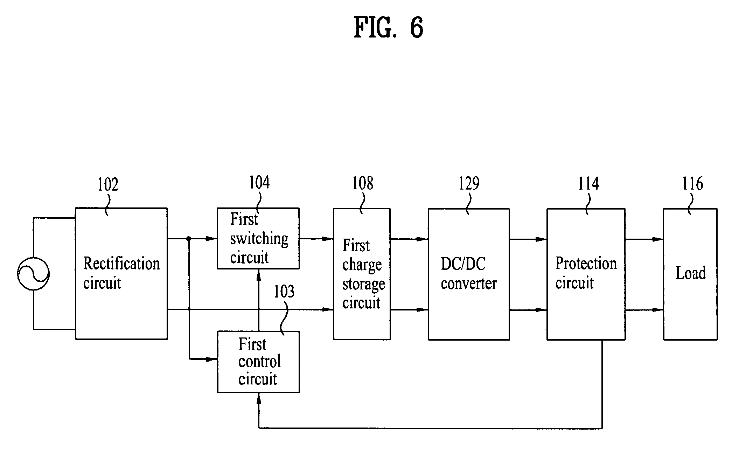

The configuration of an AC/DC converter according to a second embodiment of the present invention using the DC/DC converter as mentioned above is shown in FIG. 6.

FIG. 6 is a block diagram showing the configuration of the AC/DC converter according to the second embodiment of the present invention.

The AC/DC converter according to the second embodiment of the present invention comprises, as shown in FIG. 6, a DC/DC converter 129 for varying the level of a DC voltage in response to the user's request, instead of the second switching circuit 126, second control circuit 128 and second charge storage circuit 125 in the first embodiment of the present invention.

The DC/DC converter 129 is configured to output a DC voltage of a level desired by the user.

Hereinafter, the operation of the AC/DC converter with the above-stated configuration according to the present invention will be described.

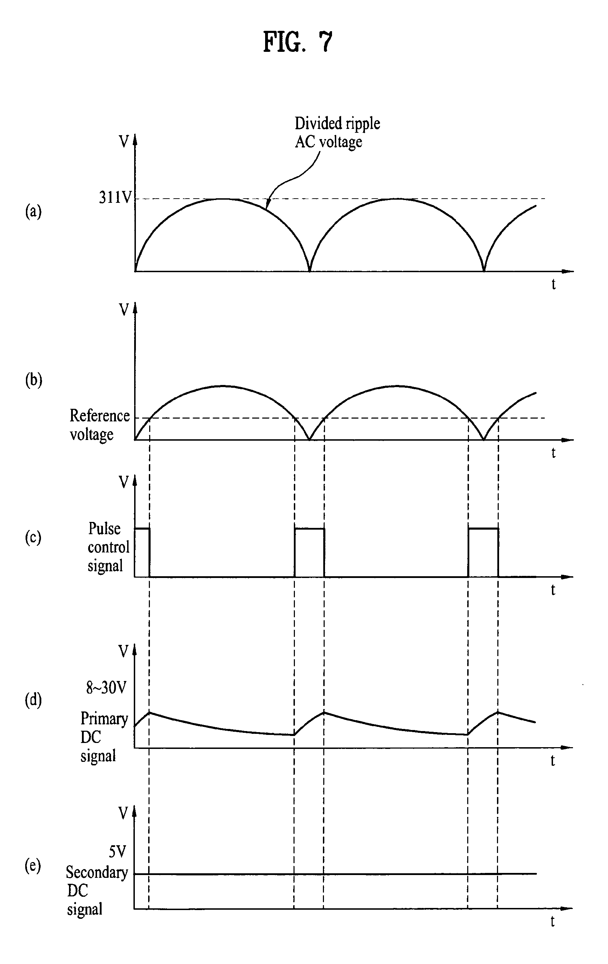

FIGs. 7A to 7E are input/output waveform diagrams of the respective components of the AC/DC converter according to the first embodiment of the present invention.

First, for an easier description of the operation of the AC/DC converter according to the present invention, it is assumed that a commercial AC voltage of 220V/60Hz is inputted and a DC voltage of 5V is outputted.

The rectification circuit 102 full wave rectifies the commercial AC voltage of 220V/60Hz to convert it into a ripple AC voltage having a peak value of about 311 to 318V and a frequency of 120Hz as shown in FIG. 7A.

Then, the driving voltage generator 132, which includes at least one resistor, at least one capacitor, at least one zener diode, etc., smoothes the ripple AC voltage from the rectification circuit 102 to convert it into a DC voltage, and outputs the converted DC voltage as a driving voltage to drive each component of the first control circuit 103.

A reference voltage can be set in the first reference voltage generator 138 based on the amount of current to be supplied to a load, as shown in FIG. 7B. It is preferable that the reference voltage is set to a higher level when the amount of current to be supplied to the load is larger. In general, because the load is a device receiving and consuming power, the rated power of the load, for example, the driving power and power consumption of the power-consuming device, is preset. In this regard, in the first reference voltage generator 138, the reference voltage can be set to correspond to the amount of current to be supplied to the load. As a result, the reference voltage in the first reference voltage generator 138 can be set based on a voltage to be supplied to the load or a DC output voltage, as shown in FIG. 7B

The ripple-proportional voltage generator 136 divides the ripple AC voltage from the rectification circuit 102 and outputs the resulting low-level voltage as shown in FIG. 7B.

In the first comparison circuit 134, the reference voltage from the first reference voltage generator 138 is inputted to the non-inverting terminal (+) of the comparator and the output voltage from the ripple-proportional voltage generator 136 is inputted to the inverting terminal (-) of the comparator. Then, the first comparison circuit 134 outputs a first pulse control signal which has a high level when the output voltage from the ripple-proportional voltage generator 136 is lower than the reference voltage and a low level when the output voltage from the ripple-proportional voltage generator 136 is higher than the reference voltage, as shown in FIG. 7C.

The first pulse control signal as shown in FIG. 7C, outputted from the first comparison circuit 134, is supplied to the first switching circuit 104.

The first switching circuit 104 is turned off in a low-level period of the first pulse control signal outputted from the first comparison circuit 134 and on in a high-level period of the first pulse control signal to supply the ripple AC voltage as shown in FIG. 7A, outputted from the rectification circuit 102, to the first charge storage circuit 108.

The first charge storage circuit 108 converts the ripple AC voltage outputted from the first switching circuit 104 into a primary DC voltage as shown in FIG. 7D. At this time, the primary DC voltage from the first charge storage circuit 108 is maintained as a constant voltage when no current is supplied to the load. However, when current is supplied to the load, the primary DC voltage is reduced in level due to discharging thereof. Then, the primary DC voltage is charged when the first pulse control signal goes high in level and discharged when the first pulse control signal goes low in level. A voltage waveform of FIG. 7D appears due to such repetitive charging and discharging. For example, for the supply of a constant voltage of 5V to the load, it is proper that a peak voltage of the voltage waveform of FIG. 7D is set to about 9V and a bottom voltage thereof is set to about 6V. Of course, a circuit designer may arbitrarily set these values by adjusting the reference voltage, the output voltage from the ripple-proportional voltage generator 136, the amount of current flowing to the load, the capacitor capacities of the first and second charge storage circuits 108 and 125, etc.

In the case where the reference voltage in the first reference voltage generator 138 is set to a lower level, the primary DC voltage from the first charge storage circuit 108 can be outputted on the order of 5V without using the second switching circuit 126, so that it can be directly used to drive the load.

Thereafter, the second control circuit 128 outputs a second pulse control signal to variously vary the primary DC voltage from the first charge storage circuit 108 to a voltage level desired by the user, and the second switching circuit 126 switches and outputs the primary DC voltage from the first charge storage circuit 108 in response to the second pulse control signal outputted from the second control circuit 128. Then, the second charge storage circuit 125 smoothes the primary DC voltage outputted from the second switching circuit 126, removes noise of the smoothed voltage and outputs the noise-removed voltage as a secondary DC voltage (see FIG. 7E).

The protection circuit 114 detects the output state of the secondary DC voltage from the second charge storage circuit 125, and stops the operation of the first control circuit 103 when the detected output state is an overvoltage or overcurrent state. That is, the first up/down circuit 140 of the first control circuit 103 does not drive the first switching circuit 104, so that no voltage is outputted from the first switching circuit 104. In other words, the protection circuit 114 detects a variation in the level of the secondary DC voltage outputted from the second charge storage circuit 125, and, when the detected level variation indicates the overvoltage or overcurrent state, allows the first up/down circuit 140 to stop the operation of the first control circuit 103. Because the power consumption and rated voltage of a general load are preset as stated previously, the current or voltage being supplied can be determined to be overcurrent or overvoltage when it becomes higher than the preset power consumption or rated voltage of the load. When the overvoltage or overcurrent state is detected in this manner, the first up/down circuit 140 is allowed to stop the operation of the first switching circuit 104. This function is similar to a function of a fuse or relay switch used in a general load, for example, a power-consuming product. That is, similarly to in general cases, this function can be performed by providing at least one fuse or relay switch or an AND circuit at the output of the first comparison circuit 134 or first up/down circuit 140.

Of course, even under the condition that the second control circuit 128, the second switching circuit 126 and the second charge storage circuit 125 are not provided, the protection circuit 114 may detect the voltage output state of the first charge storage circuit 108, and stop the operation of the first control circuit 103 when the detected output state is the overvoltage or overcurrent state.

The operation of the second control circuit 128 will hereinafter be described in detail.

The output voltage sensing circuit 152 senses the secondary DC voltage from the second charge storage circuit 125 and feeds the sensed voltage back, and the second reference voltage generator 156 outputs a reference voltage corresponding to the voltage level desired by the user.

The second comparison circuit 154 compares the voltage fed back by the output voltage sensing circuit 152 with the reference voltage outputted from the second reference voltage generator 156 and outputs the second pulse control signal for the control of the second switching circuit 126 as a result of the comparison.

Then, the second switching circuit 126 is switched in response to the second pulse control signal outputted from the second comparison circuit 154 to output the primary DC voltage from the first charge storage circuit 108, and the second charge storage circuit 125 smoothes the primary DC voltage outputted from the second switching circuit 126, removes noise of the smoothed voltage and thus outputs the level-varied and stabilized secondary DC voltage.

That is, because the second switching circuit 126 is turned on/off in response to the second pulse control signal outputted from the second comparison circuit 154, the secondary DC voltage from the second charge storage circuit 125 is charged when the second pulse control signal goes high in level and discharged when the second pulse control signal goes low in level. A voltage waveform of FIG. 7E appears due to such repetitive charging and discharging.

Of course, when the level of the second pulse control signal from the second comparison circuit 154 does not reach a desired value, the second up/down circuit 158 raises or lowers the level of the second pulse control signal.

On the other hand, the operation of the AC/DC converter according to the second embodiment of the present invention is similar to the above-described operation of the AC/DC converter according to the first embodiment of the present invention. That is, the DC/DC converter, which has generally come into wide use, varies the level of an output DC voltage according to the user's setting.

The AC/DC converter according to the present invention, configured and operated as described above, can be improved in size and weight over a conventional AC/DC converter. Also, the AC/DC conversion efficiency can be increased to about 89%, and little EMI resulting from switching is generated because the switching is performed at a low frequency of 120Hz. Furthermore, the standby power of the AC/DC converter is as small as several ten to several hundred µW and can be implemented in the form of a hybrid IC of a small package or one chip. Therefore, it is possible to reduce a space for the circuit design of the AC/DC converter.

As apparent from the above description, an AC/DC converter and a driving method thereof according to the present invention have effects as follows.

Firstly, a transformer for stepping an AC voltage up/down is not required, thereby effectively reducing the size and weight of the AC/DC converter and a space for the circuit design of the AC/DC converter. Therefore, it is possible to implement the AC/DC converter in the form of a small package or one chip.

Secondly, the AC/DC conversion efficiency can be increased to about 89% or more, and little EMI resulting from switching is generated because the switching is performed at a low frequency of 120Hz. In addition, it is possible to reduce standby power of the AC/DC converter.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. An alternating current (AC)/direct current (DC) converter comprising:
a rectification circuit (102) for converting a commercial AC(85-264V) voltage into a ripple AC voltage;
a first control circuit (103) for comparing the converted ripple AC voltage with a reference voltage and outputting a first pulse control signal as a result of the comparison;
a first switching circuit (104) for switching and outputting the ripple AC voltage from the rectification circuit in response to the first pulse control signal outputted from the first control circuit; and
a first charge storage circuit (108) for smoothing the ripple AC voltage outputted from the first switching circuit to convert it into a primary DC voltage.

2. The AC/DC converter according to claim 1, wherein the first control circuit (103) comprises:
a driving voltage generator (132) for stepping the ripple AC voltage from the rectification circuit down, smoothing the stepped-down voltage and outputting the smoothed voltage as a driving voltage;
a ripple-proportional voltage generator (136) for varying a level of the ripple AC voltage from the rectification circuit;
a first reference voltage generator (138) for varying a level of the driving voltage outputted from the driving voltage generator (132) and outputting the driving voltage of the varied level as the reference voltage, or smoothing the ripple AC voltage from the rectification circuit (102), stepping the smoothed voltage down and outputting the stepped-down voltage as the reference voltage; and
a first comparison circuit (134) for comparing an output voltage from the ripple-proportional voltage generator (136) with the reference voltage outputted from the first reference voltage generator (138) and outputting the first pulse control signal to the first switching circuit (104) as a result of the comparison.

3. The AC/DC converter according to claim 2, wherein the first control circuit (103) further comprises a first up/down circuit (140) for raising or lowering a level of the first pulse control signal outputted from the first comparison circuit (134) when the level of the first pulse control signal does not reach a desired value.

4. The AC/DC converter according to claim 2, wherein the first comparison circuit (134) outputs the first pulse control signal of a high level when the output voltage from the ripple-proportional voltage generator (136) is lower than the reference voltage from the first reference voltage generator (138) and the first pulse control signal of a low level when the output voltage from the ripple-proportional voltage generator (136) is higher than the reference voltage from the first reference voltage generator (138).

5. The AC/DC converter according to claim 1, further comprising:
a second control circuit (128) for outputting a second pulse control signal to variously vary the primary DC voltage from the first charge storage circuit to a voltage level desired by a user;
a second switching circuit (126) for switching and outputting the primary DC voltage from the first charge storage circuit (108) in response to the second pulse control signal outputted from the second control circuit (128) ; and
a second charge storage circuit (125) for smoothing the primary DC voltage outputted from the second switching circuit (126) to convert it into a secondary DC voltage.

6. The AC/DC converter according to claim 5, wherein the second control circuit (128) comprises:
an output voltage sensing circuit (152) for sensing the secondary DC voltage from the second charge storage circuit (125) and feeding the sensed voltage back;
a second reference voltage generator (156) for outputting a reference voltage to variously vary the primary DC voltage to the voltage level desired by the user; and
a second comparison circuit (132) for comparing an output voltage from the output voltage sensing circuit (152) with the reference voltage outputted from the second reference voltage generator (156) and outputting the second pulse control signal as a result of the comparison.

7. The AC/DC converter according to claim 6, wherein the second control circuit (128) further comprises a second up/down circuit (158) for raising or lowering a level of the second pulse control signal outputted from the second comparison circuit (132) when the level of the second pulse control signal does not reach a desired value.

8. The AC/DC converter according to claim 5, further comprising a DC/DC converter (129) for variously varying the primary DC voltage from the first charge storage circuit (108) to the voltage level desired by the user to output the secondary DC voltage.

9. The AC/DC converter according to claim 8, further comprising a protection circuit (114) for detecting an output state of the primary or secondary DC voltage from the first or second charge storage circuit or an output state of the secondary DC voltage from the DC/DC converter (129), and stopping an operation of the first control circuit (103) when the detected output state is an overvoltage or overcurrent state.

10. The AC/DC converter according to claim 9, wherein the first control circuit (103) comprises:
a driving voltage generator (132) for stepping the ripple AC voltage from the rectification circuit down, smoothing the stepped-down voltage and outputting the smoothed voltage as a driving voltage;
a ripple-proportional voltage generator (136) for varying a level of the ripple AC voltage from the rectification circuit (102) ;
a first reference voltage generator (138) for varying a level of the driving voltage outputted from the driving voltage generator (132) and outputting the driving voltage of the varied level as the reference voltage, or smoothing the ripple AC voltage from the rectification circuit (102), stepping the smoothed voltage down and outputting the stepped-down voltage as the reference voltage;
a first comparison circuit (134) for comparing an output voltage from the ripple-proportional voltage generator (136) with the reference voltage outputted from the first reference voltage generator (138) and outputting the first pulse control signal as a result of the comparison; and
a first up/down circuit (140) for raising or lowering a level of the first pulse control signal outputted from the first comparison circuit (134) when the level of the first pulse control signal does not reach a desired value, and blocking the output of the first pulse control signal from the first control circuit when the overvoltage or overcurrent state is detected by the protection circuit.

11. An AC/DC conversion method comprising:
a rectification circuit (102) converting a commercial AC(85-264V) voltage into a ripple AC voltage;
a first control circuit (103) comparing the converted ripple AC voltage with a reference voltage and outputting a first pulse control signal as a result of the comparison;
a first switching circuit (104) switching and outputting the converted ripple AC voltage in response to the first pulse control signal; and
a first charge storage circuit (108) smoothing the ripple AC voltage outputted in response to the first pulse control signal to convert it into a primary DC voltage.

12. The AC/DC conversion method according to claim 11, wherein the first pulse control signal has a high level when the ripple AC voltage is lower than the reference voltage and a low level when the ripple AC voltage is higher than the reference voltage.

13. The AC/DC conversion method according to claim 11, further comprising a second control circuit (128), a second switching circuit (126) and a second charge storage circuit (125) cooperating to variously vary the primary DC voltage to a voltage level desired by a user to output a secondary DC voltage.
